# EUROPÄISCHE PATENTSCHRIFT

(11) **EP 1 350 995 B1**
(45) Veröffentlichungstag und Bekanntmachung des Hinweises auf die Patenterteilung: **03.05.2006**
(21) Anmeldenummer: 03006423.2
(22) Anmeldetag: 21.03.2003
(51) Int. Cl.: F16J 15/32

(54) **Dichtring**
Seal ring
Anneau d'étanchéité

(30) Priorität: 05.04.2002 DE 10215187
(43) Veröffentlichungstag der Anmeldung: 08.10.2003
(73) Patentinhaber: Carl Freudenberg KG, 69469 Weinheim (DE)
(72) Erfinder: Kammerer, Eric, 52200 Langre (FR); Guillerme, Celine, 52360 Neuilly L'éveque (FR); Wehke, Matthias, 52200 Langre (FR)

(56) Entgegenhaltungen:
- EP-A- 0 116 721
- EP-A- 0 798 498
- EP-A- 1 026 428
- DE-A- 10 024 026
- US-A- 3 504 918
- US-A- 4 834 397
- US-A- 5 183 617
- US-A- 5 595 697
- US-A- 5 615 894
- US-A- 6 139 023

## Beschreibung

### Stand der Technik

Ein Dichtring ist allgemein bekannt, beispielsweise aus der DE 100 33 446 A1. Der vorbekannte Dichtring umfasst einen Stützring und eine daran festgelegte Dichtscheibe aus elastomerem Werkstoff, die eine abzudichtende Welle mit einem in axialer Richtung trompetenförmig verformten Vorsprung anliegend umschließt. In dem die Welle berührenden Abschnitt des Vorsprungs weist die Dichtscheibe eine schraubengangförmig verlaufende Nut zur Rückförderung von abzudichtendem Medium in Richtung des abzudichtenden Raums auf. Die Flankenflächen, die die Nut begrenzen, sind parallel zueinander angeordnet. Die Bodenfläche, die durch den Nutgrund gebildet ist, verbindet die Flankenflächen -im Schnitt betrachtet- im Wesentlichen halbkreisförmig, wobei die Nut einen Querschnitt hat, der wesentlich kleiner ist, als der Querschnitt jedes Stegs, der die aufeinanderfolgenden Windungen voneinander trennt.

Ähnliche Dichtringe sind auch aus den Dokumenten DE 100 24026 A1 und EP 1 026 428 A2 bekannt.

Bei derartigen Ausgestaltungen ist von Nachteil, dass das Rückfördervermögen, insbesondere bei hohen Drehzahlen der abzudichtenden Welle, durch den kleinen Strömungsquerschnitt der Nut eingeschränkt ist. Ölkohle und Schwebepartikel aus dem abzudichtenden Medium können sich innerhalb der Nut anlagern und verkleinern dann den ohnehin kleinen Strömungsquerschnitt weiter. Der Vorteil einer trapezförmigen Nut gegenüber eine U-förmigen Nut besteht in der Verhinderung des Abreißens von Teilen der Strömung des abzudichtenden Mediums in der Drallnut. Dadurch, dass die Strömung innerhalb der Drallnut nicht, abreißt, lagern sich Schwebstoffpartikel in Form von Teitchen auch nicht innerhalb der Drallnut an, erhitzen nicht, verkoken nicht und setzen dadurch die Drallnut nicht zu.

### Darstellung der Erfindung

Der Erfindung liegt die Aufgabe zugrunde, die zuvor genannten Nachteile zu vermeiden. Insbesondere soll das Rückfördervefmögen der Nut bei hohen Drehzahlen, und während, einer langen Betriebszeit erhöht werden und Ölkohleanlagerungen sollen vermieden werden. Der erfindungsgemäße Dichtring soll verbesserte Gebrauchseigenschaften während einer längeren Gebrauchsdauer aufweisen.

Diese Aufgabe wird erfindungsgemäß mit den Merkmalen von Anspruch 1 gelöst. Auf vorteilhafte Ausgestaltungen nehmen die Ünteransprüche Bezug.

Zur Lösung der Aufgabe ist ein Dichtring mit einem Stützring und einer daran festgelegten Dichtscheibe vorgesehen, die eine abzudichtende Welle mit einem in axialer Richtung trompetenförmig verformten Vorsprung berührt, der zumindest in dem die Welle berührenden Abschnitt mit zumindest einer schraubengangförmig verlaufenden Nut zur Rückförderung von abzudichtendem Medium in Richtung des abzudichtenden Raums versehen ist, wobei die Nut ein trapezförmiges Profil aufweist und einen Querschnitt hat, der größer ist als der Querschnitt jedes Stegs, der die aufeinanderfolgenden Windungen voneinander trennt. Gegenüber dem Profil des eingangs genannten Dichtrings aus dem Stand der Technik, ist das trapezförmige Profil der Nut und der größere Nutquerschnitt von Vorteil. Durch das trapezförmige Profil der Nut wird das Rückfördervermögen des abzudichtenden Mediums gegenüber von. Drallnuten mit U-förmigem Profil um etwa ein Drittel erhöht. Dieses erhöhte Rückfördervermögen bleibt auch nach extrem langer Betriebszeit erhalten, da die Drallnut keine strömungstechnischen Toträume und keine spitzen Ecken und Kanten aufweist. Eine solche Drallnut ist weniger empfindlich für Ölkohleanlagerungen.
Generell kann die Dichtscheibe aus einem polymeren oder elastomeren Werkstoff bestehen. Die Dichtscheibe kann beispielsweise aus einem Elastomer oder einem PTFE-Compound bestehen. Alternative, Werkstoffe für die Dichtscheibe sind Thermoplaste, vernetzbare Thermoplaste oder Duroplaste. In Abhängigkeit von den jeweiligen Gegebenheiten des Anwendungsfalles kann die Dichtscheibe trompetenförmig in Richtung des abzudichtenden Raums oder entgegen dem abzudichtenden Raum, also in Richtung Umgebung vorgewölbt sein. Unabhängig von einer solchen Ausgestaltung stellt sich durch die jeweilige Gestaltung der schraubengangförmig verlaufenden Nut eine Rückförderung des abzudichtenden Mediums in Richtung des abzudichtenden Raums ein.

Erfindugsgemäß ist es vorgesehen, dass die Dichtscheibe eine zylinderförmige Kontaktfläche zur Welle aufweist, die in axialer Richtung beiderseits von kegelförmig gegeneinander geneigten Flankenflächen der Nut begrenzt ist und dass die Flankenflächen in eine zylinderförmige, den Nutgrund bildende Bodenfläche münden. Sowohl die Kontaktfläche als auch die Bodenfläche erstrecken sich parallel zueinander und entsprechend der Nut spiralförmig. Durch die im Wesentlichen eben ausgebildete Bodenfläche ist gegenüber Bodenflächen mit halbkreisförmig gerundetem Nutgrund von Vorteil, dass eine große Nutbreite erreicht wird, ohne dass die Nut eine unnötige Tiefe aufweist. Eine sehr tiefe Nut würde die Herstellung erschweren und die Dichtscheibe unerwünscht schwächen.

Die Flankenflächen können durch Abrundungen von der Kontakt- und der Bodenflächen getrennt sein. Die Vermeidüng von sprunghaften Richtungsänderungen innerhalb der Nut hat den Vorteil, dass die Gefahr von Ölkohleanlagerungen auf ein Minimum reduziert ist.

Hinsichtlich einer möglichst einfachen und kostengünstigen Herstellbarkeit können alle Abrundungen einen im Wesentlichen übereinstimmenden Radius haben.

Die Radien der Abrundungen können 0,05 bis 0,2 mm betragen. Ein derartiger Bereich hat den Vorteil, dass einerseits die Radien groß genug sind, um strömungstechnische Toträume und Ölkohleanlagerungen in der Nut zu vermeiden, ebenso wie Kerbwirkungen im Übergangsbereich zwischen Flankenflächen und Nutgrund. Andererseits wird der Querschnitt der Nut nicht unerwünscht stark eingeschränkt. Würden die Radien kleiner als 0,05 mm sein, würde die Gefahr von Ölkohleanlagerungen und unerwünschten Kerbwirkungen zunehmen; wären die Radien demgegenüber größer als 0,2 mm würde der Strömungsquerschnitt der Nut unerwünscht verkleinert.

Die Nut kann mehrere Windungen umfassen. Die Rückförderwirkung des abzudichtenden Mediums in Richtung des abzudichtenden Raums wird dadurch verbessert. Außerdem ist von Vorteil, dass mehrere Windungen des Dichtabschnitts der Dichtscheibe auf der Welle anliegen, wodurch die spezifische Anpressung verringert wird, ohne die Rückförderung zu verkleinern.

Die Nut hat einen Querschnitt, der größer ist als der Querschnitt jedes Stegs, der die aufeinanderfolgenden Windungen voneinander trennt. Ein derartiges Verhältnis ist erforderlich, um ein erhöhtes Rückfördervermögen der Nut auch bei hohen Drehzahlen zu erreichen. Beträgt beispielsweise das Verhältnis aus dem Querschnitt der Nut zum Querschnitt eines Stegs zumindest 1,5, stellt sich während der bestimmungsgemäßen Verwendung des Dichtrings ein Rückfördervermögen des abzudichtenden Mediums in Richtung des abzudichtenden Raums ein, das bei einer Drehzahl der abzudichtenden Welle in Höhe von etwa 6000 min⁻¹ um 30 % größer ist äls bei vergleichbaren Dichtringen, bei denen das zuvor genannte Verhältnis 1 oder kleiner ist. Durch das Verhältnis größer als 1 bleibt dieses erhöhte Rückfördervermögen von abzudichtendem Medium in Richtung des abzudichtenden Raums auch nach extrem langer Betriebszeit des Dichtrings erhalten, weil selbst übliche Mengen an Ölkohleanlagerungen während einer sehr langen Gebrauchsdauer nur einen vernachlässigbar geringen Einfluss auf die Größe des Strömungsquerschnitts der Nut und damit auf die Gebrauchseigenschaften des Dichtrings haben.

Das Profil der Nut kann gleichschenkelig gestaltet sein. Hierbei ist von Vorteil, dass das. Formgebungswerkzeug für das gleichschenklige Trapez durch weniger Bearbeitungswerkzeuge und weniger Arbeitsgänge kostengünstig herstellbar ist.

Nach einer anderen Ausgestaltung besteht die Möglichkeit, dass das Profil der Nut ungleichschenklig gestaltet ist. Gegenüber von Nuten mit gleichschenkeligem Profil ist von Vorteil, dass das ungleichschenklige Trapez bei erhöhtem Schmiermittelaufkommen an der Dichtstelle eine größere Rückförderwirkung hat.

Die Nut kann einen Bestandteil eines eingängigen oder eines mehrgängigen Gewindes bilden. Das in der Herstellung einfachere eingängige Gewinde hat außerdem den Vorteil, dass weniger Luft aus der Umgebung in das Aggregat gepumpt wird. Die eingängige Drallnut wird bevorzugt für die Motorenabdichtung angewendet. Betriebsbedingungen sind dabei zumeist Spritzöl und leichter pulsierender Unterdruck im Motor.

Demgegenüber wird eine Nut, die einen Bestandteil eines mehrgängigen Gewindes bildet, bevorzugt dann benutzt, wenn ein Ölstand an der Dichtstelle und ein leichter Überdruck im Aggregat abzudichten sind.

Bevorzugt hat die Nut eine Tiefe, die 15 bis 75% der Dicke der Dichtscheibe hat. Weiter verbesserte Gebrauchseigenschaften des Dichtrings stellen sich ein, wenn die Tiefe 35 bis 45% der Dicke der Dichtscheibe aufweist. Hat die Nut eine Tiefe, die weniger als 15% der Dicke der Dichtscheibe beträgt, ist das Rückfördervermögen durch den vergleichsweise kleinen Strömungsquerschnitt unerwünscht stark eingeschränkt. Hat die Nut demgegenüber eine Tiefe, die mehr als 75% der Dicke der Dichtscheibe beträgt, ist die verbleibende Dicke der Dichtscheibe im Bereich der Nut nur noch sehr gering. Die radiale Anpressung der Dichtscheibe im die Welle berührenden Abschnitt ist dadurch nur noch vergleichsweise gering, so dass es während der bestimmungsgemäßen Verwendung des Dichtrings zu Undichtigkeiten in diesem Bereich kommen kann.

Die Nut kann eine Tiefe von 0,2 bis 0,4 mm, bevorzugt von 0,25 bis 0,28 mm haben. Für die meisten Anwendungen und Abmessungen des erfindungsgemäßen Dichtrings sind derartige Tiefen besonders vorteilhaft.

Die aufeinanderfolgenden Windungen der Nut können eine Steigung von 0,4 bis 0,8 mm haben. Bevorzugt beträgt die Steigung der aufeinanderfolgenden Windungen 0,5 bis 0,7 mm. Bei Steigungen der Nut von 0,4 bis 0,8 bevorzugt von 0,5 bis 0,7 mm ist von Vorteil, dass ausreichend viele Windungen auf der Welle anliegen.

Beträgt die Steigung der Nut weniger als 0,4 mm ist von Nachteil, dass die Steigung für eine ausreichende Rückförderung zu klein ist.

Beträgt die Steigung demgegenüber mehr als 0,8 mm ist von Nachteil, dass speziell bei in axialer Richtung kurzen Abschnitten, in denen der trompetenförmig verformte Vorsprung die abzudichtende Welle anliegend berührt, nur eine geringe Anzahl von Windungen möglich ist, woduch die Rückförderwirkung des abzudichtenden Mediums in Richtung des abzudichtenden Raums unerwünscht eingeschränkt ist.

Die Dichtscheibe kann auf der der Nut abgewandten Seite eine im Wesentlichen glattflächige Oberfläche aufweisen. In fertigungstechnischer Hinsicht ist der- Dichtring dadurch besonders einfach und kostengünstig herstellbar.

Demgegenüber besteht die Möglichkeit, dass die Dichtscheibe auf der der Nut abgewandten Seite eine im Wesentlichen Wellenförmige Oberfläche aufweist. Dadurch wird eine vergrößerte Oberfläche erzielt; der Wärmeübergang von der großen, im Wesentlichen wellenförmigen Oberfläche an die Umgebung ist dadurch verbessert, so dass sich verbesserte Gebrauchseigenschaften des Dichtrings während einer verlängerten Gebrauchsdauer ergeben. Die Bildung von Ölkohle ist dadurch reduziert.

Die Dichtscheibe kann aus PTFE bestehen. Dichtscheiben aus einem derartigen Material sind gegen die meisten abzudichtenden Medien beständig und weisen außerordentlich gute Gebrauchseigenschaften während einer sehr lagen Gebrauchsdauer auf. Nach einem gewissen, vernachlässigbar geringen Anfangsverschleiß, glasiert die Oberfläche der Dichtscheibe im Bereich des die abzudichtende Welle berührenden Abschnitts und wird dadurch besonders widerstandsfähig, Außerdem ist PTFE bestrebt, nach Verformungen seine herstellungsbedingte Form wieder anzunehmen. Im Bereich des trompetenförmig verformten Vorsprungs ist daher auch ohne Hilfsmittel, wie beispielsweise Schraubenzugfederringe, stets eine ausreichende Anpressung des verformten Vorsprungs an den die Welle berührenden Abschnitt gegeben.

Die Dichtscheibe kann beispielsweise aus Polyphenylensulfid (PPS) oder Polyamid (PA) bestehen. Beide genannten Werkstoffe haben den Vorteil eines geringen Preises, und die schraubengangförmig verlaufende Drallnut ist hervorragend formbar.

Die Dichtscheibe kann außerdem aus Perfluorethylenpropylen bestehen. Im Gegensatz zu Polytetrafluorethylen weist eine Dichtscheibe aus Perfluorethylenpropylen den Vorteil auf, dass dieses Material im Injektionsverfahren verarbeitbar ist.

Außerdem besteht die Möglichkeit, dass die Dichtscheibe aus Perfluoralcoxycopolymer besteht. Dieser Werkstoff hat den Vorteil, dass er im Spritzgießverfahren verarbeitbar ist.

Die Dichtscheibe kann aus einem thermoplastischen Elastomer bestehen. Dabei ist von Vorteil, dass die Anbindung an den Stützring ohne aufwändige Vorbehandlung möglich ist.

### Kurzbeschreibung der Zeichnung

Ein Ausführungsbeispiel des erfindungsgemäßen Dichtrings wird nachfolgend anhand der Figuren 1 bis 3 näher erläutert. Diese zeigen, jeweils in schematischer Darstellung:
Fig. 1 den Dichtring im herstellungsbedingten, nicht eingebauten Zustand,
Fig. 2 den Dichtring aus Fig. 1 während seiner bestimmungsgemäßen Verwendung, eingebaut in seinem Einbauraum und
Fig. 3 einen Ausschnitt aus der Dichtscheibe aus den Figuren 1 und 2 in vergrößerter Darstellung.

### Ausführung der Erfindung

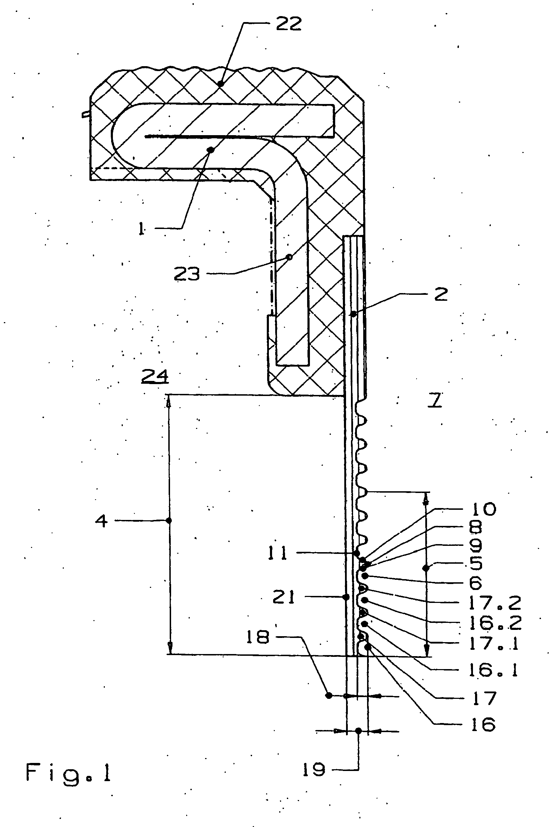

Im Ausführungsbeispiel aus den Figuren 1 bis 3 ist ein Dichtring mit einem Versteifungssring 1 gezeigt, wobei am Stützring 1 die Dichtscheibe 2 festgelegt ist. Die Dichtscheibe 2 hat einen in axialer Richtung trompetenförmig verformten Vorsprung 4, der im Abschnitt 5 die abzudichtende Welle 3 unter elastischer Vorspannung dichtend umschließt. Die Dichtscheibe 2 hat auf der der Welle 3 zugewandten Seite eine schraubengangförmig verlaufende Nut 6, die einen Rückförderdrall bildet und bei Drehung der Welle abzudichtendes Medium in Richtung des abzudichtenden Raumes 7 zurückfördert: Die vorteilhaften Gebrauchseigenschaften des erfindungsgemäßen Dichtrings sind einerseits auf das trapezförmige Profil der Nut 6 und andererseits darauf zurückzuführen, dass die Nut 6 einen Querschnitt hat, der größer ist als der Querschnitt jedes Stegs 17, 17.1, 17.2,... der die aufeinanderfolgenden Windungen 16, 16.1, 16.2,... voneinander trennt. Das trapezförmige Profil der Nut 6 und/oder der Querschnitt der Nut 6, der größer ist als der Querschnitt jedes Stegs 17, 17,1, 17,2... bewirkt einen großen Strömungsquerschnitt und dadurch ein hohes Rückfördervermögen vom abzudichtenden Medium in Richtung des abzudichtenden Raums. Außerdem ist bei Ölkohlebildung die Gefahr reduziert, dass sich die Nut zusetzt und dadurch die Funktion des Dichtrings beeinträchtigt wird. Der beste Effekt lässt sich erzielen, wenn der Dichtring eine Nut 6 mit trapezförmigem Profil aufweist, wobei die Nut 6 einen Querschnitt hat, der größer ist als der Querschnitt jedes Stegs 17, 17.1, 17,2.... Die guten Gebrauchseigenschaften des Dichtrings bei hohen Betriebstemperaturen im Bereich von etwa 160°C bei hohen Drehzahlen im Bereich von etwa 6000 min⁻¹, wobei es sich bei dem abzudichtenden Medium beispielsweise um legierte Öle handelt, bleiben auch bei hoher Gebrauchsdauer weitestgehend gleich, gut, bei stark verminderter Ölkohlebildung.

In Fig. 1 ist der Dichtring im, herstellungsbedingten Zustand gezeigt. Der Stützring 1 ist vollständig von polymerem Werkstoff 22 umschlössen und bildet radial außenseitig eine statische Abdichtung zu einem hier nicht dargestellten Gehäuse. Der Stützring 1 ist im Wesentlichen T-förmig ausgebildet, wobei der Radialvorsprung 23 des Stützrings 1 mittels des polymeren Werkstoffs 22 mit der Dichtscheibe 2 verbunden ist.

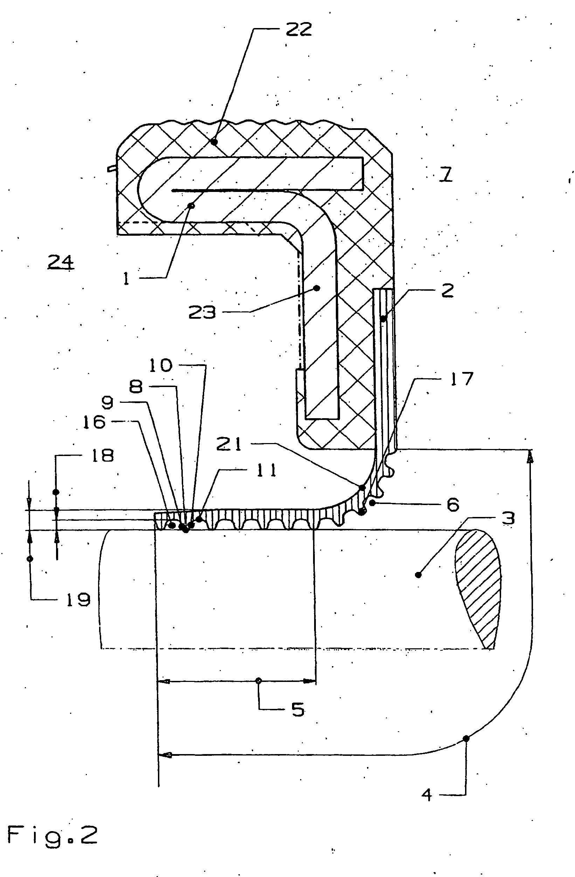

In Fig. 2 ist der Dichtring aus Fig. 1 im eingebauten Zustand gezeigt. Die Dichtscheibe 2 berührt mit ihrem in axialer Richtung trompetenförmig verformten Vorsprung 4 die Oberfläche der abzudichtenden Welle 3 und ist in diesem Ausführungsbeispiel entgegen dem abzudichtenden Raum 7, also in Richtung der Umgebung 24, vorgewölbt.

Davon abweichend besteht jedoch auch die Möglichkeit, die Dichtscheibe 2 in Richtung des abzudichtenden Raums 7 vorzuwölben, wobei auch in einem solchen Fall die Nut 6 auf der der abzudichtenden Welle 3 zugewandten Seite der Dichtscheibe 2 angeordnet ist.

Die schraubengangförmig verlaufende Nut 6 ist derart gestaltet, dass das abzudichtende Medium in Richtung des abzudichtenden Raums 7 zurückgefördert wird.

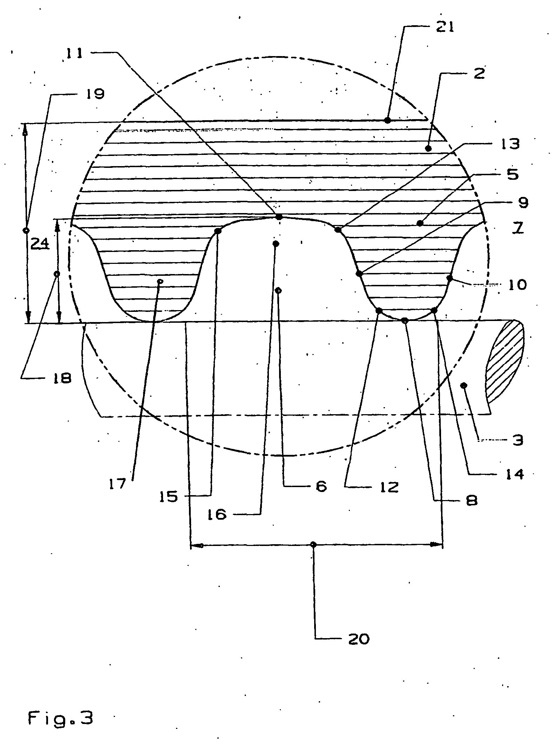

In Fig. 3 ist ein vergrößerter Ausschnitt aus der Dichtscheibe 2 gezeigt, wobei die Nut 6 ein trapezförmiges Profil aufweist und einen Querschnitt hat, der größer ist als der Querschnitt jedes Stegs 17, 17.1, 17.2,...der die aufeinanderfolgenden Windungen 16, 16.1, 16.2... voneinander trennt.

Die Dichtscheibe 2 weist eine zylinderförmige Kontaktfläche 8 zur Welle 3 auf, die in axialer Richtung beiderseits von kegelförmig gegeneinander geneigten Flankenflächen 9, 10 der Nut 6 begrenzt ist.

Durch die Abrundungen 12, 13, 14, 15 wird die Werkzeugherstellung vereinfacht und ein strömungstechnisch günstigerer Querschnitt erreicht; Toträume im Bereich der Ecken der Nut 6, in denen sich, durch mangelnde Strömungsgeschwindigkeit, Ölkohle anlagern könnte, werden dadurch vermieden.

Das Verhältnis aus dem Querschnitt der Nut 6 zum Querschnitt eines Stegs 17 beträgt in diesem Ausführungsbeispiel 1,5, wobei das Profil der Nut 6 gleichschenkelig gestaltet ist.

Die Nut hat eine Tiefe, die 0,26 mm beträgt. Das entspricht 40 % der Dicke 19 der Dichtscheibe 2. Die Steigung 20 der aufeinanderfolgenden Windungen 16, 16.1, 16.2, ... der Nut 6 beträgt 0,6 mm wobei der Durchmesser der abzudichtenden Welle 3 in diesem Ausführungsbeispiel 85 mm beträgt.

Abhängig von den jeweiligen Gegebenheiten des Anwendungsfalles kann die Nut 6 einen Bestandteil eines eingängigen oder mehrgängigen Gewindes bilden. Eingängige Gewinde sind kostengünstiger herstellbar und gelangen bevorzugt für Motorabdichtungen zur Anwendung, zur Abdichtung von Spritzöl bei leicht pulsierendem Unterdruck im Motor. Mehrgängige Gewinde als Nut 6 sind vorzuziehen, wenn ein Ölstand an der Dichtstelle bei leichtem Überdruck im abzudichtenden Raum 7 abzudichten ist.

Die dargestellte Dichtscheibe ist besonders gut an die abzudichtende Welle 3 anschmiegsam und dichtet auch bei Form-, Lage- und Rundlaufabweithungen der Welle 3 zuverlässig ab.

## Patentansprüche

1. Dichtring mit einem Stützring (1) und einer daran festgelegten Dichtscheibe (2), die im Gebrauch eine abzudichtende Welle (3) mit einem in axialer Richtung trompetenförmig verformten Vorsprung (4) berührt, der zumindest an dem die Welle berührenden Abschnitt (5)mit zumindest einer Rückfördemut (6) für ein abzudichtendes Medium in Richtung eines abzudichtenden Raums (7) versehen ist, **dadurch gekennzeichnet, daß** die Nut (6) im verformten zustand der Dichtsheibe schraubengangförmig verläuft und ein derartiges trapezförmiges Profil aufweist, daß die Dichtscheibe (2) im verformten zustand eine zylinderförmige Kontaktfläche (8) zur Welle (3) aufweist, die in axialer Richtung beiderseits von kegelförmig gegeneinander geneigten Flankenflächen (9, 10) der Nut begrenzt ist, und die Flankenflächen (9, 10) in eine zylinderförmige, den Nutgrund bildende Bodenfläche (11) münden, und daß die Nut (6) einen Querschnitt hat, der größer als der Querschnitt jedes Stegs (17, 17.1, 17.2) ist, der die aufeinanderfolgenden Windungen der Nut (16, 16.1, 16.2) von einander trennt.

2. Dichtring nach Anspruch 1, **dadurch gekennzeichnet, dass** die Flankenflächen (9, 10) durch Abrundungen (12, 13, 14, 15) von der Kontakt- (8) und der Bodenfläche (11) getrennt sind.

3. Dichtring nach Anspruch 2, **dadurch gekennzeichnet, dass** alle Abrundungen (12, 13, 14, 15) einen im wesentlichen übereinstimmenden Radius haben.

4. Dichtring nach Anspruch 3, **dadurch gekennzeichnet, dass** die Radien der Abrundungen (12, 13, 14, 15) 0,05 bis 0,2 mm betragen.

5. Dichtring nach Anspruch 1, **dadurch gekennzeichnet, dass** das Verhältnis aus dem Querschnitt der Nut (6) zum Querschnitt eines Stegs (17) zumindest 1,5 beträgt.

6. Dichtring nach einem der Ansprüche 1 bis 5, **dadurch gekennzeichnet, dass** die Nut (6) mehrere Windungen (16, 16.1, 1.6.2, ...) umfaßt.

7. Dichtring nach einem der Ansprüche 1 bis 6, **dadurch gekennzeichnet, dass** das Profil der Nut (6) gleichschenklig gestaltet ist.

8. Dichtring nach einem der Ansprüche 1 bis 6, **dadurch gekennzeichnet, dass** das Profil der Nut (6) ungleichschenklig gestaltet ist.

9. Dichtring nach einem der Ansprüche 1 bis 8, **dadurch gekennzeichnet, dass** die Nut (6) einen Bestandteil eines eingängigen Gewindes bildet.

10. Dichtring nach einem der Ansprüche 1 bis 8, **dadurch gekennzeichnet, dass** die Nut (6) einen Bestandteil eines mehrgängigen Gewindes bildet.

11. Dichtring nach einem der Ansprüche 1 bis 10, **dadurch gekennzeichnet, dass** die Nut (6) eine Tiefe (18) hat, die 15 bis 75 % der Dicke (19) der Dichtscheibe (2) entspricht.

12. Dichtring nach einem der Ansprüche 1 bis 11, **dadurch gekennzeichnet, dass** die Nut (6) eine Tiefe (18) von 35 bis 45% der Dicke (19) der Dichtscheibe (2) hat.

13. Dichtring nach einem der Ansprüche 1 bis 12, **dadurch gekennzeichnet, dass** die Nut (6) eine Tiefe (18) von 0,2 bis 0,4 mm hat.

14. Dichtring nach einem der Ansprüche 1 bis 13, **dadurch gekennzeichnet, dass** die Tiefe (18) 0,25 bis 0,28 mm beträgt.

15. Dichtring nach einem der Ansprüche 1 bis 14, **dadurch gekennzeichnet; dass** die aufeinanderfolgenden Windungen (16, 16.1, 16.2.) der Nut (6) eine Steigung (20) von 0,4 bis 0,8 mm haben.

16. Dichtring nach Anspruch 15, **dadurch gekennzeichnet, dass** die Steigung (20) der aufeinanderfolgenden Windungen (16, 16.1, 16.2) 0,5 bis 0,7 mm beträgt.

17. Dichtring nach einem der Ansprüche 1 bis 16, **dadurch gekennzeichnet, dass** die Dichtscheibe (2) auf der der Nut (6) abgewandten Seite eine im wesentlichen glattflächige Oberfläche (21) aufweist.

18. Dichtring nach einem der Ansprüche 1 bis 16, **dadurch gekennzeichnet, dass** die Dichtscheibe (2) auf der der Nut(6) abgewandten Seite eine im Wesentlichen gewellte Oberfläche (21) aufweist.

19. Dichtring nach einem der Ansprüche 1 bis 18, **dadurch gekennzeichnet, dass** die Dichtscheibe (2) aus einem PTFE-Compound besteht.

20. Dichtring nach einem der Ansprüche 1 bis 18, **dadurch gekennzeichnet, dass** die Dichtscheibe (2) aus PPS oder Polyamid besteht.

21. Dichtring nach einem der Ansprüche 1 bis 18, **dadurch gekennzeichnet, dass** die Dichtscheibe (2) aus Perfluorethylenpropylen besteht.

22. Dichtring nach einem der Ansprüche 1 bis 18, **dadurch gekennzeichnet, dass** die Dichtscheibe (2) aus Perfluoralcoxy Copolymer besteht.

23. Dichtring nach einem der Ansprüche 1 bis 18, **dadurch gekennzeichnet, dass** die Dichtscheibe (2) aus einem elastomerem Werkstoff besteht.

24. Dichtring nach einem der Ansprüche 1 bis 18, **dadurch gekennzeichnet, dass** die Dichtscheibe (2) aus einem thermoplastischen Elastomer besteht.

25. Dichtring nach einem der Ansprüche 1 bis 18, **dadurch gekennzeichnet, dass** die Dichtscheibe (2) aus einem vemetzten Thermoplast besteht.

## Claims

1. Sealing ring having a back-up ring (1) and a sealing disc (2) secured thereto, which latter, during use, touches a shaft (3) to be sealed with a projection (4) which is axially deformed in the shape of a trumpet and is provided, at least on the portion (5) touching the shaft, with at least one return groove (6) for a medium to be sealed in the direction of a space (7) to be sealed, **characterized in that** the groove (6), in the deformed state of the sealing disc, runs helically and has a trapezoidal profile such that the sealing disc (2), in the deformed state, has a cylindrical contact surface (8) to the shaft (3), which contact surface, in the axial direction, is delimited on both sides by flank faces (9, 10) of the groove which are mutually inclined in the shape of a cone, and the flank faces (9, 10) open out into a cylindrical base area (11) forming the floor of the groove, and **in that** the groove (6) has a cross section which is greater than the cross section of each web (17, 17.1, 17.2) separating successive windings of the groove (16, 16.1, 16.2) one from another.

2. Sealing ring according to Claim 1, **characterized in that** the flank faces (9, 10) are separated from the contact surface (8) and the base area (11) by roundings (12, 13, 14, 15).

3. Sealing ring according to Claim 2, **characterized in that** all the roundings (12, 13, 14, 15) have a substantially matching radius.

4. Sealing ring according to Claim 3, **characterized in that** the radii of the roundings (12, 13, 14, 15) measure 0.05 to 0.2 mm.

5. Sealing ring according to Claim 1, **characterized in that** the ratio of the cross section of the groove (6) to the cross section of a web (17) is at least 1.5.

6. Sealing ring according to one of Claims 1 to 5, **characterized in that** the groove (6) comprises a plurality of windings (16, 16.1, 16.2, ...).

7. Sealing ring according to one of Claims 1 to 6, **characterized in that** the profile of the groove (6) is of equal-sided configuration.

8. Sealing ring according to one of Claims 1 to 6, **characterized in that** the profile of the groove (6) is of unequal-sided configuration.

9. Sealing ring according to one of Claims 1 to 8, **characterized in that** the groove (6) forms a constituent part of a single-start thread.

10. Sealing ring according to one of Claims 1 to 8, **characterized in that** the groove (6) forms a constituent part of a multi-start thread.

11. Sealing ring according to one of Claims 1 to 10, **characterized in that** the groove (6) has a depth (18) corresponding to 15 to 75 % of the thickness (19) of the sealing disc (2).

12. Sealing ring according to one of Claims 1 to 11, **characterized in that** the groove (6) has a depth (18) measuring 35 to 45 % of the thickness (19) of the sealing disc (2).

13. Sealing ring according to one of Claims 1 to 12, **characterized in that** the groove (6) has a depth (18) of 0.2 to 0.4 mm.

14. Sealing ring according to one of Claims 1 to 13, **characterized in that** the depth (18) measures 0.25 to 0.28 mm.

15. Sealing ring according to one of Claims 1 to 14, **characterized in that** the successive windings (16, 16.1, 16.2) of the groove (6) have a pitch (20) of 0.4 to 0.8 mm.

16. Sealing ring according to Claim 15, **characterized in that** the pitch (20) of the successive windings (16, 16.1, 16.2) measures 0.5 to 0.7 mm.

17. Sealing ring according to one of Claims 1 to 16, **characterized in that** the sealing disc (2), on the side facing away from the groove (6), has a substantially smooth-faced surface (21).

18. Sealing ring according to one of Claims 1 to 16, **characterized in that** the sealing disc (2), on the side facing away from the groove (6), has a substantially corrugated surface (21).

19. Sealing ring according to one of Claims 1 to 18, **characterized in that** the sealing disc (2) consists of a PTFE compound.

20. Sealing ring according to one of Claims 1 to 18, **characterized in that** the sealing disc (2) consists of PPS or polyamide.

21. Sealing ring according to one of Claims 1 to 18, **characterized in that** the sealing disc (2) consists of perfluoroethylene propylene.

22. Sealing ring according to one of Claims 1 to 18, **characterized in that** the sealing disc (2) consists of perfluoroalcoxy copolymer.

23. Sealing ring according to one of Claims 1 to 18, **characterized in that** the sealing disc (2) consists of an elastomeric material.

24. Sealing ring according to one of Claims 1 to 18, **characterized in that** the sealing disc (2) consists of a thermoplastic elastomer.

25. Sealing ring according to one of Claims 1 to 18, **characterized in that** the sealing disc (2) consists of a cross-linked thermoplastic.

## Revendications

1. Anneau d'étanchéité avec une bague d'appui (1) et une rondelle d'étanchéité (2) fixée sur celle-ci, qui touche en service un arbre à rendre étanche (3) avec une saillie (4) déformée en forme de trompette en direction axiale, qui est pourvue au moins sur la partie (5) touchant l'arbre d'au moins une rainure de refoulement (6) pour un fluide à retenir de façon étanche en direction d'un espace à rendre étanche (7), **caractérisé en ce que** la rainure (6) est de forme hélicoïdale à l'état déformé de la rondelle d'étanchéité et présente un profil trapézoïdal tel que la rondelle d'étanchéité (2) présente, à l'état déformé, une face de contact cylindrique (8) avec l'arbre (3), qui est limitée des deux côtés en direction axiale par des faces de flancs (9, 10) de la rainure inclinées en forme de cône l'une par rapport à l'autre, et les faces de flancs (9, 10) débouchent dans une face de fond cylindrique (11) formant le fond de la rainure, et **en ce que** la rainure (6) a une section qui est plus grande que la section de chaque nervure (17, 17.1, 17.2), qui sépare l'une de l'autre les spires successives (16, 16.1, 16.2) de la rainure.

2. Anneau d'étanchéité selon la revendication 1, **caractérisé en ce que** les faces de flancs (9, 10) sont séparées de la face de contact (8) et de la face de fond (11) par des arrondis (12, 13, 14, 15).

3. Anneau d'étanchéité selon la revendication 2, **caractérisé en ce que** tous les arrondis (12, 13, 14, 15) ont un rayon sensiblement concordant.

4. Anneau d'étanchéité selon la revendication 3, **caractérisé en ce que** les rayons des arrondis (12, 13, 14, 15) valent de 0,05 à 0,2 mm.

5. Anneau d'étanchéité selon la revendication 1, **caractérisé en ce que** le rapport de la section de la rainure (6) à la section d'une nervure (17) vaut au moins 1,5.

6. Anneau d'étanchéité selon l'une quelconque des revendications 1 à 5, **caractérisé en ce que** la rainure (6) comporte plusieurs spires (16, 16.1, 16.2, ...).

7. Anneau d'étanchéité selon l'une quelconque des revendications 1 à 6, **caractérisé en ce que** le profil de la rainure (6) est de forme isocèle.

8. Anneau d'étanchéité selon l'une quelconque des revendications 1 à 6, **caractérisé en ce que** le profil de la rainure (6) est de forme non isocèle.

9. Anneau d'étanchéité selon l'une quelconque des revendications 1 à 8, **caractérisé en ce que** la rainure (6) forme une partie d'un filet à une entrée.

10. Anneau d'étanchéité selon l'une quelconque des revendications 1 à 8, **caractérisé en ce que** la rainure (6) forme une partie d'un filet à entrées multiples.

11. Anneau d'étanchéité selon l'une quelconque des revendications 1 à 10, **caractérisé en ce que** la rainure (6) a une profondeur (18), qui correspond à 15 à 75% de l'épaisseur (19) de la rondelle d'étanchéité (2).

12. Anneau d'étanchéité selon l'une quelconque des revendications 1 à 11, **caractérisé en ce que** la rainure (6) a une profondeur (18) de 35 à 45% de l'épaisseur (19) de la rondelle d'étanchéité (2).

13. Anneau d'étanchéité selon l'une quelconque des revendications 1 à 12, **caractérisé en ce que** la rainure (6) a une profondeur (18) de 0,2 à 0,4 mm.

14. Anneau d'étanchéité selon l'une quelconque des revendications 1 à 13, **caractérisé en ce que** la profondeur (18) vaut de 0,25 à 0,28 mm.

15. Anneau d'étanchéité selon l'une quelconque des revendications 1 à 14, **caractérisé en ce que** les spires successives (16, 16.1, 16.2) de la rainure (6) ont un pas (20) de 0,4 à 0,8 mm.

16. Anneau d'étanchéité selon la revendication 15, **caractérisé en ce que** le pas (20) des spires successives (16, 16.1, 16.2) vaut de 0,5 à 0,7 mm.

17. Anneau d'étanchéité selon l'une quelconque des revendications 1 à 16, **caractérisé en ce que** la rondelle d'étanchéité (2) présente une surface sensiblement lisse (21) sur son côté situé à l'opposé de la rainure (6).

18. Anneau d'étanchéité selon l'une quelconque des revendications 1 à 16, **caractérisé en ce que** la rondelle d'étanchéité (2) présente une surface sensiblement ondulée (21) sur son côté situé à l'opposé de la rainure (6).

19. Anneau d'étanchéité selon l'une quelconque des revendications 1 à 18, **caractérisé en ce que** la rondelle d'étanchéité (2) se compose d'un composé de PTFE.

20. Anneau d'étanchéité selon l'une quelconque des revendications 1 à 18, **caractérisé en ce que** la rondelle d'étanchéité (2) se compose de PPS ou de polyamide.

21. Anneau d'étanchéité selon l'une quelconque des revendications 1 à 18, **caractérisé en ce que** la rondelle d'étanchéité (2) se compose de perfluoroéthylènepropylène.

22. Anneau d'étanchéité selon l'une quelconque des revendications 1 à 18, **caractérisé en ce que** la rondelle d'étanchéité (2) se compose de copolymère de perfluoroalcoxy.

23. Anneau d'étanchéité selon l'une quelconque des revendications 1 à 18, **caractérisé en ce que** la rondelle d'étanchéité (2) se compose d'un matériau élastomère.

24. Anneau d'étanchéité selon l'une quelconque des revendications 1 à 18, **caractérisé en ce que** la rondelle d'étanchéité (2) se compose d'un élastomère thermoplastique.

25. Anneau d'étanchéité selon l'une quelconque des revendications 1 à 18, **caractérisé en ce que** la rondelle d'étanchéité (2) se compose d'un thermoplastique réticulé.
